# EUROPEAN PATENT APPLICATION

(11) **EP 4 819 317 A1**
(43) Date of publication of application: **07.10.2026**
(21) Application number: 26158279.5
(22) Date of filing: 12.02.2026
(51) Int. Cl.: H01M 50/15, H01M 50/159, H01M 50/342, H01M 50/55, H01M 50/555, H01M 50/627

(54) **RECHARGEABLE BATTERY AND BATTERY MODULE**

(30) Priority: 02.04.2025 KR 20250042990
(71) Applicant: SAMSUNG SDI CO., LTD., Yongin-si, Gyeonggi-do 17084 (KR)
(72) Inventor: YUN, Jooseok, 17084 Yongin-si (KR)
(74) Representative: Maiwald GmbH

(57) **Abstract**

The rechargeable battery includes a can (110) accommodating an electrode assembly and an electrolyte in an inner space and a cap plate (120) coupled to the can to seal the can. A safety vent (160) is provided in the cap plate and configured to rupture at a predetermined pressure, and a vent guide (170) positioned inside the cap plate and facing the safety vent. The vent guide includes a pair of guide walls (53,56) configured to protrude to the outside of the cap plate when the safety vent is ruptured.

## Description

### BACKGROUND OF THE DISCLOSURE

### (a) Field of the Disclosure

The present disclosure relates to a rechargeable battery and, more specifically, to a rechargeable battery including a safety vent and a battery module including a plurality of rechargeable batteries.

### (b) Description of the Related Art

A battery module may include a plurality of rechargeable batteries arranged in parallel and a plurality of bus bars electrically connecting the rechargeable batteries. Each of the rechargeable batteries may include a positive terminal, a negative terminal, and a safety vent provided in a cap plate. The safety vent is ruptured when the internal pressure of the rechargeable battery becomes excessive so that gas can be discharged from the battery.

When a safety vent of a rechargeable battery is ruptured, various debris and the like may be discharged together with internal gas. When these ejected materials spread to neighboring rechargeable batteries, heat may be transferred to neighboring rechargeable batteries.

### SUMMARY OF THE DISCLOSURE

The present disclosure provides a rechargeable battery and a battery module capable of preventing heat from being transferred to neighboring rechargeable batteries by controlling a direction that materials are ejected when a safety vent of the rechargeable battery is ruptured.

A rechargeable battery according to an aspect includes a can accommodating an electrode assembly and an electrolyte, a cap plate coupled to the can to seal the can, a safety vent provided in the cap plate and configured to rupture at a predetermined pressure, and a vent guide positioned inside the cap plate and facing the safety vent. The vent guide includes a pair of guide walls configured to protrude outside of the cap plate when the safety vent is ruptured.

The guide walls may be parallel to the inner surface of the cap plate, may stand to have an inclination angle relative to the cap plate when the safety vent is ruptured, and the guide walls may face each other in a width direction of the cap plate. Each of the pair of guide walls may be rectangular shaped, and an edge of a longer side of the rectangular shape may extend in a length direction of the cap plate.

The vent guide may include a center part facing the safety vent, and a fixing part surrounding the center part and fixed to the inner surface of the cap plate. The pair of guide walls may be in the center part. Each of the guide walls may be surrounded by a notching line and a pair of folding lines.

The notching line may include a main notching line extending in a direction of the cap plate at the center of the center part, and a pair of auxiliary notching lines connected to ends of the main notching line and extending in the width direction of the cap plate. The folding lines may be parallel to the main notching line, and the folding lines may be positioned equidistant from the main notching line in the width direction of the cap plate.

Each of the notching line and the folding lines may be a notch formed in a surface of the vent guide. The depth of the notch of the notching line may be greater than the depth of the notches of the folding lines. The rupture pressure of the notching line may be equal to or less than the rupture pressure of the safety vent. The rupture pressure of each of the folding lines may be higher than the rupture pressure of the safety vent.

The guide walls may be configured to separate from each other when the notching line ruptures before the safety vent or simultaneously with the rupture of the safety vent, and the guide walls are bent about the folding line to protrude outside of the cap plate. Each of the main notching line and the folding lines may be extended to the edge of the fixing part to have the same length as the length of the vent guide.

Each of the guide walls may be surrounded by a cut line and a pair of folding lines. The cut line may include a main cut line positioned in the longitudinal direction of the cap plate at the center of the center part, and a pair of auxiliary cut lines connected to ends of the main cut line and extending in the width direction of the cap plate. The folding lines may be parallel to the main cut line and may be equidistant from the main cut line in the width direction of the cap plate.

The folding lines may be configured as notches in a surface of the vent guide, and the folding lines are configured such that a rupture pressure of each of the folding lines may be higher than a rupture pressure of the safety vent.

A vent hole may be formed in the cap plate, and the safety vent may be positioned on the cap plate to cover the vent hole. The pair of guide walls may have overlapping parts, and, when the safety vent is ruptured, a protrusion height of each of the guide walls may be greater than half of a width of a vent hole in a width direction of the cap plate.

The vent guides may be provided in a pair. Each of the vent guides may include a fixing part fixed to the inner surface of the cap plate, one of the guide walls connected to the fixing part and positioned corresponding to the vent hole, and a folding line positioned between the fixing part and the guide wall. The width of each of the guide walls according to the width direction of the cap plate may be greater than 0.5 times and less than or equal to 1 times the width of the vent hole.

A battery module according to an aspect includes a plurality of rechargeable batteries, a plurality of bus bars electrically connecting the plurality of rechargeable batteries, and a bus bar holder supporting the plurality of bus bars. Each of the plurality of rechargeable batteries includes a cap plate, a safety vent provided in the cap plate and configured to be ruptured at a predetermined pressure, and a vent guide positioned inside the cap plate and facing the safety vent. The vent guide includes a pair of guide walls configured to protrude to the outside of the cap plate when the safety vent is ruptured. The rechargeable batteries are aligned along a width direction of the cap plates. The guide walls of each of the rechargeable batteries face each other along the width direction of the cap plate when the safety vent is ruptured.

Each of the guide walls may be rectangular shaped, and an edge of the longer side of the rectangular shape may extend in the longitudinal direction of the cap plate.

In each of the rechargeable batteries, notching line may be positioned at three edges among four edges of each of the guide walls, and a folding line may be positioned at the other edge. The rupture pressure of the notching line may be equal to or less than the rupture pressure of the safety vent. The rupture pressure of the folding line may be higher than the rupture pressure of the safety vent.

In each of the rechargeable batteries, a cut line may be located at three edges among four edges of each of the pair of guide walls, and a folding line may be located at the other edge. The rupture pressure of the folding line may be higher than the rupture pressure of the safety vent.

In each of the rechargeable batteries, a vent hole may be formed in the cap plate, and the safety vent may be positioned on the cap plate to cover the vent hole. A pair of guide walls may have overlapping portions. When the safety vent is ruptured, a protrusion height of each of the pair of guide walls may be greater than half of a width of a vent hole in a width direction of the cap plate.

In each of the rechargeable batteries, the vent guides may be provided in a pair. Each of the vent guides may include a fixing part fixed to the inner surface of the cap plate, one of the guide walls connected to the fixing part and positioned to correspond to the vent hole, and a folding line positioned between the fixing part and the guide wall. The width of each of the guide walls in the width direction of the cap plate may be greater than 0.5 times and less than or equal to 1 times the width of the vent hole.

According to embodiments, when internal gas, flames, and various debris are ejected by the opening of the vent hole, a pair of guide walls may prevent ejected materials from being transferred onto a neighboring rechargeable battery, particularly onto a safety vent of the neighboring rechargeable battery. Therefore, thermal runaway of one rechargeable battery can be suppressed from spreading to adjacent rechargeable batteries, thereby making the battery module safer.

### BRIEF DESCRIPTION OF THE DRAWINGS

FIG. 1 is an exploded perspective view of a battery module according to an embodiment of the present disclosure.
FIG. 2 is a perspective view of a rechargeable battery among the battery modules illustrated in FIG. 1.
FIG. 3 is a cross-sectional view of a rechargeable battery taken along line III-III of FIG. 2.
FIG. 4 is an exploded cross-sectional view of an electrode assembly of the rechargeable battery shown in FIG. 3.
FIG. 5 is a partially enlarged cross-sectional view of FIG. 3.
FIG. 6 is a partially enlarged cross-sectional view of the cap plate cut along the VI-VI line of FIG. 2.
FIG. 7 is a perspective view showing the inner surface of the vent guide illustrated in FIG. 5.
FIG. 8 is a perspective view showing the operating state of the vent guide when the safety vent is ruptured.
FIG. 9 is a cross-sectional view showing the operating state of the vent guide when the safety vent is ruptured.
FIG. 10 is a perspective view of an inner surface of a vent guide in a rechargeable battery according to another embodiment.
FIG. 11 is a partially enlarged cross-sectional view of a cap plate of a rechargeable battery according to another embodiment of the present disclosure.
FIG. 12 is a perspective view of an inner surface of the vent guide shown in FIG. 11.
FIG. 13 is a partially enlarged cross-sectional view of a cap plate of a rechargeable battery according to another embodiment of the present disclosure.
FIG. 14 is a perspective view of an inner surface of the vent guide shown in FIG. 13.
FIG. 15 is a perspective view of rechargeable batteries according to an embodiment of the present disclosure.

### DETAILED DESCRIPTION OF THE EMBODIMENTS

Hereinafter, various embodiments of the present disclosure will be described in detail with reference to the accompanying drawings so that those skilled in the art may easily implement the present disclosure. The present disclosure may be implemented in various forms and is not limited to the embodiments described herein.

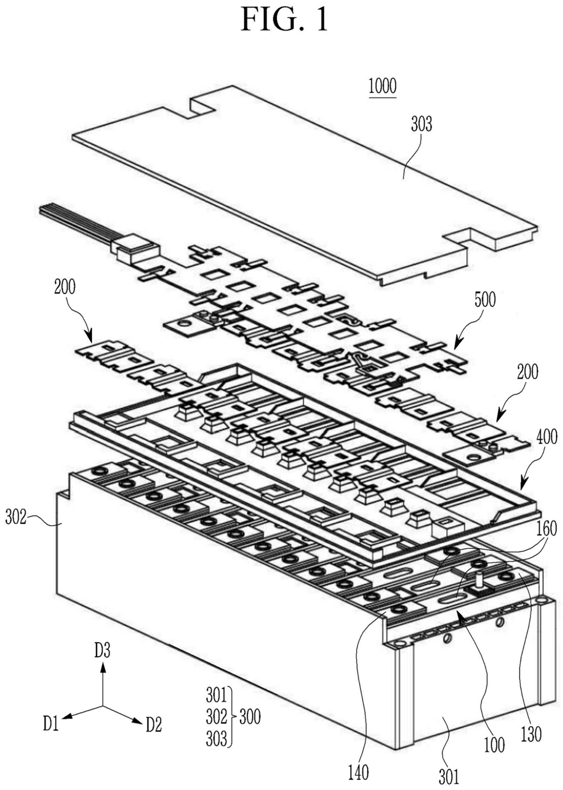

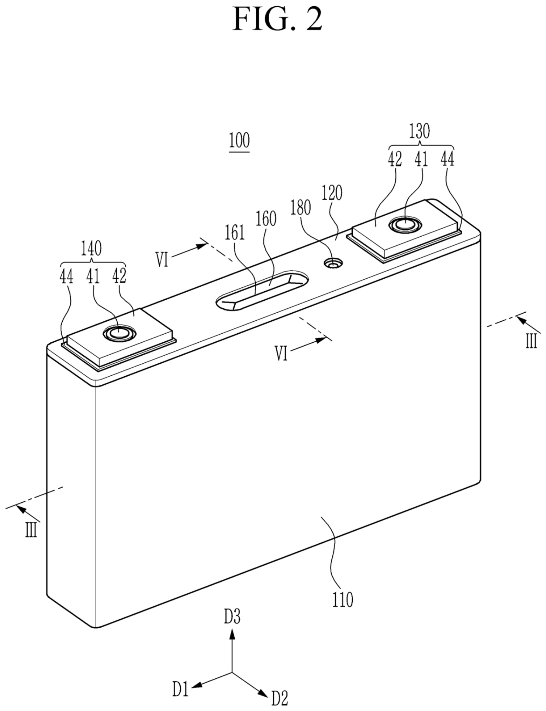

FIG. 1 is an exploded perspective view of a battery module according to an embodiment of the present disclosure. FIG. 2 is a perspective view of a rechargeable battery among the battery modules illustrated in FIG. 1.

Referring to FIGS. 1 and 2, the battery module 1000 according to the present embodiment may include a plurality of rechargeable batteries 100 and a plurality of bus bars 200 coupled to the plurality of rechargeable batteries 100 to electrically connect the rechargeable batteries 100. The battery module 1000 also includes a frame 300 for aligning and supporting a plurality of rechargeable batteries 100, a bus bar holder 400 for supporting a plurality of bus bars 200, and a circuit board 500 equipped with a plurality of circuit components.

The rechargeable battery 100 may have, for example, a rectangular parallelepiped shape, and a plurality of rechargeable batteries 100 may be arranged in a row. The plurality of rechargeable batteries 100 may be arranged in a row so that relatively wide surfaces of the rechargeable batteries 100 face each other. A rechargeable battery 100 may include a can 110 and a cap plate 120 that accommodate an electrode assembly and an electrolyte. The rechargeable battery may also include a positive terminal 130 and a negative terminal 140 provided on the cap plate 120.

The cap plate 120 may have an approximate rectangular shape. A direction of the relatively long edge among the four edges of the cap plate 120 may be referred to as a 'length direction' D1 of the cap plate 120, and a direction of the relatively short edge may be referred to as a 'width direction' D2 of the cap plate 120. The positive terminal 130 and the negative terminal 140 may be positioned at a distance from each other in the length direction D1 of the cap plate 120. The rechargeable batteries 100 may be aligned in parallel along the width direction D2 of the cap plate 120.

The frame 300 may include a pair of end plates 301 and a pair of side plates 302. The end plates 301 may be in contact with the two rechargeable batteries located at the outermost side among the plurality of rechargeable batteries 100. The side plates 302 may be orthogonal to the end plates 301, and the side plates 302 may be in contact with the side surfaces of the plurality of rechargeable batteries 100.

The frame 300 may further include a top plate 303 and a bottom plate (not shown). The top plate 303 may be positioned above the circuit board 500, and the bottom plate may be positioned in contact with the bottom surfaces of the plurality of rechargeable batteries 100. The frame 300 may have an approximate rectangular parallelepiped shape, and the plurality of rechargeable batteries 100, the plurality of bus bars 200, the bus bar holder 400, and a circuit board 500 may be accommodated in the frame 300.

The bus bar holder 400 may be located above the plurality of rechargeable batteries 100. The bus bar holder 400 may be an approximately rectangular shaped insulating plate. A plurality of openings may be positioned in the bus bar holder 400 to expose a plurality of terminals 130 and 140 of the rechargeable batteries 100. A plurality of bus bars 200 may be coupled to the plurality of terminals 130 and 140 exposed by the openings.

The bus bars 200 may connect the rechargeable batteries 100 in series and/or in parallel. For example, one bus bar 200 may be coupled to a terminal of one rechargeable battery 100 and a terminal of another rechargeable battery 100. The two terminals to which the bus bar 200 connects may be both positive terminals 130, both negative terminals 140, or a positive terminal 130 and a negative terminal 140. The bus bars 200 may be fixed to the two terminals by laser welding or the like.

The circuit board 500 may be electrically connected to the bus bars 200. A plurality of circuit components for controlling and managing the rechargeable batteries 100 and a plurality of components for measuring state information such as voltage and temperature of the rechargeable batteries 100 may be mounted on the circuit board 500.

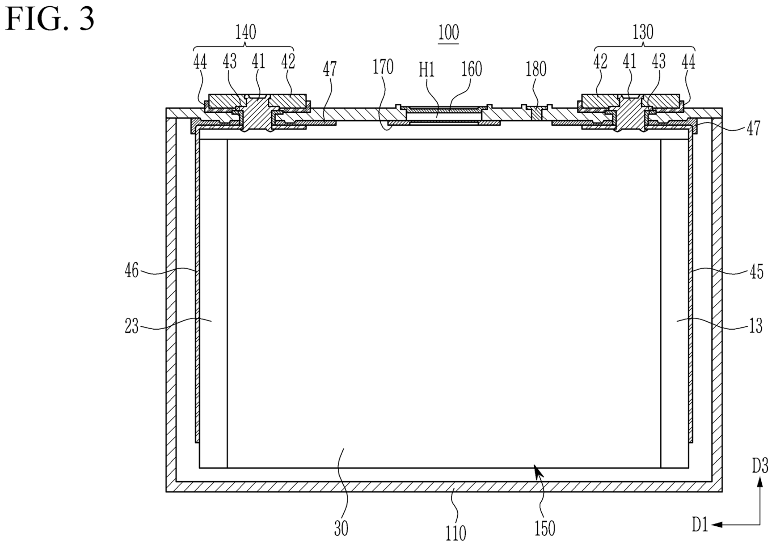

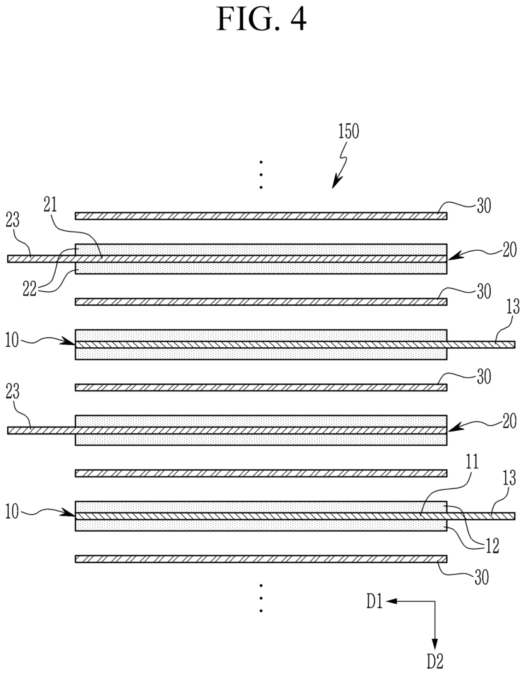

FIG. 3 is a cross-sectional view of a rechargeable battery taken along line III-III of FIG. 2. FIG. 4 is an exploded cross-sectional view of an electrode assembly of the rechargeable battery shown in FIG. 3.

Referring to FIGS. 2 to 4, the rechargeable battery 100 may include an electrode assembly 150, a can 110 for accommodating the electrode assembly 150 and an electrolyte in an inner space, and a cap plate 120 coupled to the can 110 to seal the can 110. In addition, the rechargeable battery 100 may include the positive terminal 130, the negative terminal 140, a safety vent 160, and a vent guide 170 provided in the cap plate 120.

The electrode assembly 150 may include a positive electrode 10, a negative electrode 20, and a separator 30, and the electrode assembly 150 may be configured as a stacked type or a wound type. FIGS. 3 and 4 illustrate a stacked type electrode assembly as an example. In the case of the stacked type, a plurality of positive electrode 10 and a plurality of negative electrode 20 may be alternately stacked one by one with the separator 30 interposed between each pair of positive and negative electrodes 10 and 20 to form an electrode assembly 150. In the case of the wound type, a stacked structure of a negative electrode, a first separator, a positive electrode, and a second separator may be wound to form an electrode assembly.

The positive electrode 10 may include a positive substrate 11 and positive active material layer 12 provided on at least one surface of the positive substrate 11. The negative electrode 20 may include a negative substrate 21 and a negative active material layer 22 provided on at least one surface of the negative substrate 21. The separator 30 is positioned between the positive electrode 10 and the negative electrode 20 to physically separate the positive electrode 10 and the negative electrode 20.

The positive substrate 11 may be an electrically conductive thin metal plate, for example, an aluminum foil, an aluminum mesh, or the like. The positive active material layer 12 includes a positive active material and may further include a binder and/or a conductive material. The positive substrate 11 provides a path for moving charges generated from the positive active material layer 12 and supports the positive active material layer 12.

The positive active material may contain a lithium transition metal composite oxide. The lithium transition metal composite oxide may include at least one of, for example, a lithium-nickel-based oxide, a lithium-cobalt-based oxide, a lithium-manganese-based oxide, a lithium-iron phosphate-based compound, and a cobalt-free lithium nickel-manganese-based oxide.

The negative substrate 21 may be an electrically conductive thin metal plate, for example, copper foil, copper mesh, nickel foil, nickel mesh, or the like. The negative active material layer 22 includes a negative active material and may further include a binder and/or a conductive material. The negative substrate 21 provides a path for moving charges generated in the negative active material layer 22 and supports the negative active material layer 22.

The negative active material may include at least one of a carbon-based active material and a silicon-based active material. The carbon-based active material may include at least one of natural graphite and artificial graphite. The silicon-based active material may include at least one of a silicon-carbon composite active material, silicon oxide (SiOx, 0<x≤2), and silicon carbide (SiC).

In each of the positive active material layer 12 and the negative active material layer 22, a binder may include at least one of an aqueous binder, a non-aqueous binder, and a dry binder. In each of the positive active material layer 12 and the negative active material layer 22, the conductive material may include at least one of a carbon-based material such as natural graphite, artificial graphite, carbon black, carbon fiber, carbon nanofiber, and carbon nanotube; a metal material in the form of a metal powder or a metal fiber including copper, nickel, aluminum, silver, or the like; and a conductive polymer such as a polyphenylene derivative.

The separator 30 may be formed of a porous substrate or may be formed of a porous substrate in which a coating layer is provided on at least one surface of the substrate. The porous substrate may include at least one of polyethylene, polypropylene, polyethylene terephthalate, polypropylene terephthalate, polybutylene terephthalate, polyester, polycarbonate, and polyimide. In an example embodiment, the coating layer includes a binder, and the binder includes a polyvinylidene fluoride-based compound.

In the positive electrode 10, the positive active material layer 12 may be provided on the positive substrate 11 except for the edge of a first side of the positive substrate 11 (e.g., right side with respect to FIG. 4). A part of the positive substrate 11 that is not covered with the positive active material layer 12 may be referred to as the positive uncoated part 13. The plurality of positive uncoated parts 13 of a plurality of positive electrodes 10 are stacked on each other and may be integrally fixed by welding or the like.

In the negative electrode 20, the negative active material layer 22 may be provided on the negative substrate 21 except for the edge of a second side of the negative substrate 21 (e.g., the left side with respect to FIG. 4). A part of the negative substrate 21 that is not covered with the negative active material layer 22 may be referred to as the negative uncoated part 23. The plurality of negative uncoated parts 23 of a plurality of negative electrodes 20 are stacked on each other and may be integrally fixed by welding or the like.

The electrode assembly 150 may be accommodated in the inner space of the can 110 together with an electrolyte, for example, an electrolyte solution. The electrolyte solution is a medium that enables the movement of lithium ions between the positive electrode 10 and the negative electrode 20, and may include a lithium salt, an organic solvent, and an additive agent. The separator 30 includes electrolyte solution due to its porous structure and may allow lithium ions to pass through its structure.

The can 110 and the cap plate 120 may be made of a metal such as stainless steel or the like. Two terminal holes may be positioned in the cap plate 120, and the positive terminal 130 and the negative terminal 140 may be positioned in the terminal holes. Each of the positive terminal 130 and the negative terminal 140 may include, for example, a combination of the rivet terminal 41 and the terminal plate 42.

The rivet terminal 41 may be inserted into the terminal hole with a sealing gasket 43 interposed between the rivet terminal 41 and the terminal hole. An insulator 44 may be positioned between the cap plate 120 and the terminal plate 42. The sealing gasket 43 may insulate the cap plate 120 from the rivet terminal 41 and seal the terminal hole to prevent leakage of the electrolyte. As shown in FIGS. 2 and 3, a plug 180 may be used to seal the electrolyte injection port.

The rechargeable battery 100 may include a positive connector 45 connected to the positive uncoated part 13 to the positive terminal 130, and a negative connector 46 connected to the negative uncoated part 23 to the negative terminal 140. The positive terminal 130 may be electrically connected to the positive electrode 10, and the negative terminal 140 may be electrically connected to the negative electrode 20. An internal insulator 47 for insulating each of the positive connector 45 and the negative connector 46 from the cap plate 120 may be positioned on the inner surface of the cap plate 120.

The safety vent 160 and the vent guide 170 may be positioned between the positive terminal 130 and the negative terminal 140, and the safety vent 160 and the vent guide 170 may be positioned at the center part of the cap plate 120. The vent guide 170 may be positioned inside the cap plate 120 and may face the safety vent 160 in the thickness direction D3 of the cap plate 120.

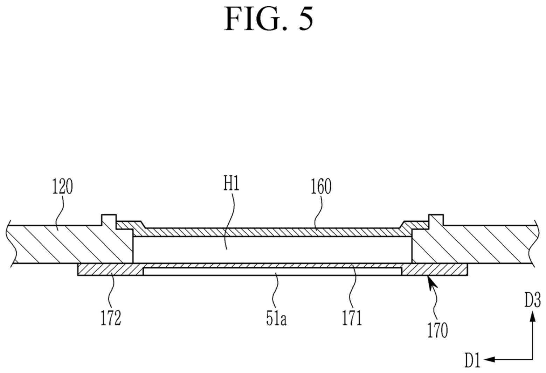

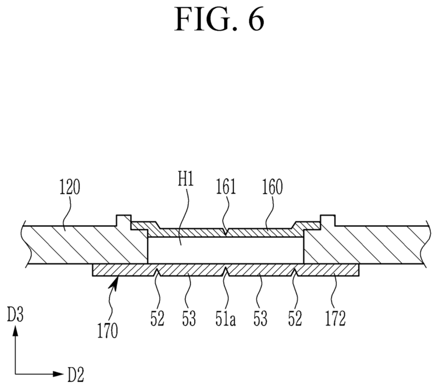

FIG. 5 is a partially enlarged cross-sectional view of FIG. 3. FIG. 6 is a partially enlarged cross-sectional view of the cap plate cut along the VI-VI line of FIG. 2.

Referring to FIGS. 5 and 6, a vent hole H1 may be formed in the cap plate 120, and the safety vent 160 may be provided on the cap plate 120 to cover the vent hole H1. The safety vent 160 may be a metal plate having a thickness the is less than the thickness of the cap plate 120, and the safety vent 160 may include a notch 161 having a predetermined depth such that the notch 161 may be ruptured at a predetermined pressure. The vent hole H1 and the safety vent 160 may be approximately rectangular shape, and a relatively long edge of the rectangular shape may be in the length direction D1 of the cap plate 120.

Gas may be generated in the rechargeable battery 100 due to various causes such as rapid charging and discharging, exposure to a high-temperature environment. And the internal pressure of the rechargeable battery 100 may increase rapidly due to the generated gas. The safety vent 160 is ruptured when the internal pressure of the rechargeable battery 100 reaches a predetermined pressure to emit internal gas, thereby making the rechargeable battery 100 safer.

In general, when internal gas is ejected through a ruptured safety vent, flames or various debris may be ejected together with the internal gas. The ejected materials from one rechargeable battery may spread to neighboring rechargeable batteries, and heat may be transferred by the ejected materials to neighboring rechargeable batteries.

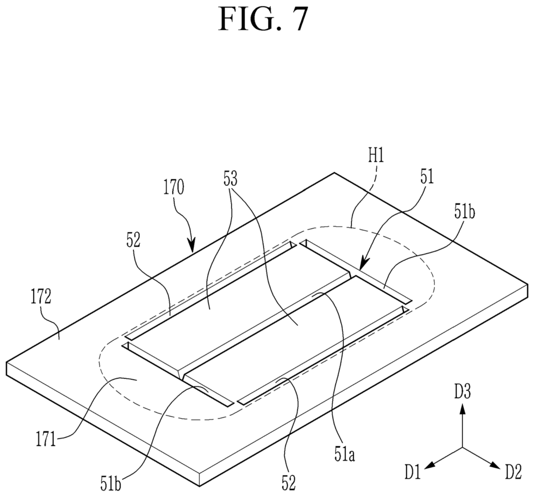

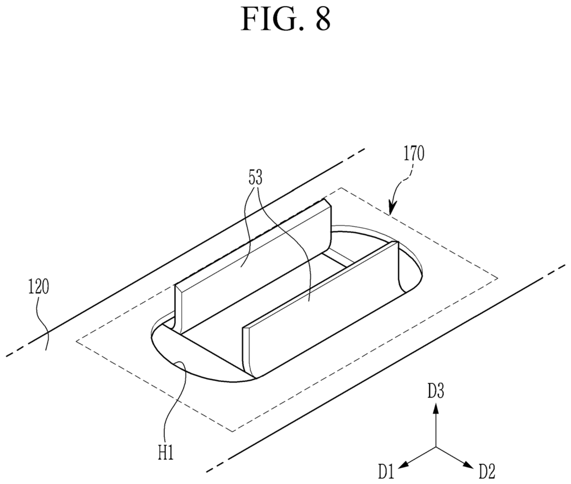

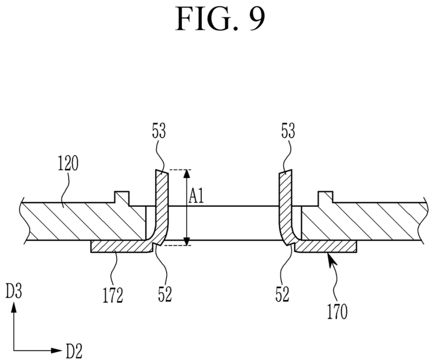

FIG. 7 is a perspective view showing the inner surface of the vent guide illustrated in FIG. 5. FIGS. 8 and 9 are perspective view and cross-sectional views showing the operating state of the vent guide when the safety vent is ruptured.

Referring to FIGS. 5 to 9, the vent guide 170 may have a plate shape with a predetermined thickness, and the vent guide 170 may be larger than that of the vent hole H1 so as to cover all of the vent hole H1. For example, a length of the vent guide 170 in the length direction D1 of the cap plate 120 may be longer than a length of the vent hole H1, and a width of the vent guide 170 in the width direction D2 of the cap plate 120 may be wider than a width of the vent hole H1.

The vent guide 170 may be divided into a center part 171 facing the vent hole H1 and the safety vent 160 and a fixing part 172 overlapping the cap plate 120. The fixing part 172 of the vent guide 170 may be fixed to the cap plate 120 by adhesion or welding. A pair of guide walls 53 surrounded by a notching line 51 and a pair of folding lines 52 may be positioned in the center part 171 of the vent guide 170.

The notching line 51 may be a notch to a predetermined depth from one surface (for example, an inner surface) of the vent guide 170. The pair of folding lines 52 may also be notches to a predetermined depth positioned from the surface of the vent guide 170. The depth of the notch constituting the notching line 51 may be deeper than the depths of the notches constituting the folding lines 52. Accordingly, the notching line 51 may be ruptured at a lower pressure than a pressure at which the folding lines 52 would rupture.

The notching line 51 may be composed of, for example, a main notching line 51ain the length direction D1 of the cap plate 120, and a pair of auxiliary notching lines 51b connected to both ends of the main notching line 51a and extending in the width direction D2 of the cap plate 120. The pair of folding lines 52 are parallel to the main notching line 51a, and the folding lines 52 may be positioned on both sides of the main notching line 51a, in particular, equidistant from the main notching line 51a in the width direction D2 of the cap plate 120.

The main notching line 51a may be positioned equidistant from both edges of the safety vent 160 and extend in the length direction D1 of the cap plate 120. As such, the main notching line 51a may be positioned to cross the center of the center part 171. The length of the main notching line 51a may be equal to or slightly shorter than the length of the vent hole H1. The length of each of the pair of auxiliary notching lines 51b may be equal to or slightly shorter than the width of the vent hole H1.

The folding lines 52 may be positioned along straights line with both edges of the vent hole H1 in the thickness direction D3 of the cap plate 120, or may be positioned slightly inside both edges of the vent hole H1, as shown in FIG. 6..

Each of the guide walls 53 may be rectangular shape. The four edges of each guide wall 53 may be composed of three edges corresponding to the notching line 51 and one edge corresponding to the folding line 52. The guide walls 53 may have the same length and the same width, and the guide walls 53 may face each other in the width direction D2 of the cap plate 120 with the main notching line 51a interposed therebetween.

The guide walls 53 may be integrally connected and may be positioned parallel to the inner surface of the cap plate 120. As noted above, the internal pressure of the rechargeable battery 100 may be rapidly increased due to various causes such as rapid charging and discharging, exposure to a high-temperature environment, and the like. The vent guide 170 may be ruptured along the notching line 51 when the internal pressure of the rechargeable battery 100 reaches a predetermined pressure. The rupture pressure of the notching line 51 may be precisely controlled according to the depth of the notch constituting the notching line 51.

The rupture pressure of the notching line 51 may be equal to or lower than the rupture pressure of the safety vent 160. Therefore, when the internal pressure of the rechargeable battery 100 increases, the notching line 51 of the vent guide 170 may be ruptured and the safety vent 160 may be ruptured at the same time, or the safety vent 160 may be ruptured after the notching line 51 of the vent guide 170 is ruptured. The pair of guide walls 53 may be separated from each other as the three edges are torn when the notching line 51 is ruptured.

The internal gas of the rechargeable battery 100 may be discharged to the outside by the rupture of the safety vent 160 and the opening of the vent hole H1. At the time of rupture, the pair of guide walls 53 may be bent about the folding lines 52 by an ejection pressure to protrude to outside of the cap plate 120 through the vent hole H1.

The protruding guide walls 53 may stand to a predetermined inclination angle relative to the cap plate 120, and the protruding guide walls 53 may face each other with the vent hole H1 interposed therebetween in the width direction D2 of the cap plate 120. In each of the erected guide walls 53, the relatively long edge may be in the length direction D1 of the cap plate 120, and the relatively short edge may be in the thickness direction D3 of the cap plate 120.

The rupture pressure of the folding line 52 may be higher than the rupture pressure of the safety vent 160. The folding line 52 causes deformation of the vent guide 170 so that the guide walls 53 may be easily bent when the safety vent 160 is ruptured, and after the guide walls 53 are vertically erected, the guide walls 53 can be stably supported.

In the battery module 1000 (see FIG. 1), a plurality of rechargeable batteries 100 may be aligned in parallel along the width direction D2 of the cap plate 120, and a plurality of safety vents 160 may be positioned to be close to each other along the width direction D2 of the cap plate 120. A part of the rechargeable battery 100 having the weakest structural rigidity and durability may be referred to as a safety vent 160.

When the vent hole H1 of the specific rechargeable battery 100 is opened, the ejected materials may be ejected in all directions or in a specific direction based on the ruptured shape of the safety vent 160. If the ejected materials are ejected onto a safety vent of a neighboring rechargeable battery, thermal runaway of one rechargeable battery may be transferred to another rechargeable battery.

When the safety vent 160 is ruptured, the guide walls 53 are moved to a predetermined height at sides of the vent hole H1 (both sides in the width direction D2 of the cap plate 120). In this case, the protruding height A1 (see FIG. 9) of the guide walls 53 may be approximately the same as the distance between the main notching line 51a and the folding line 52.

The distance between the cap plate 120 and the bus bar holder 400 in the battery module 1000 (see FIG. 1) may be about 15 mm or more, and the width of the cap plate 120 may be about 30 mm or more. The distance between the main notching line 51a and the folding line 52, that is, the protruding height A1 of the guide walls 53, may be about 15 mm. As such, the pair of guide walls 53 extend the full distance between the cap plate 120 and the bus bar holder 400.

When ejected materials are ejected through the vent hole H1, the pair of guide walls 53 may prevent the ejected materials from being diffused onto neighboring rechargeable batteries 100, particularly onto the safety vents 160 of the neighboring rechargeable batteries 100. Therefore, the vent guide 170 may suppress the thermal runaway of the specific rechargeable battery 100 from being transferred to the neighboring rechargeable batteries 100 and thereby make the battery module 1000 safer. In this case, for convenience of description, the influence of the thickness of the cap plate 120 on a height of the guide walls 53 protruding from the cap plate 120 may be ignored or omitted.

The vent guide 170 may be made of a flame-retardant material. For example, the vent guide 170 may be made of a material having a heat-resistant temperature of approximately 200 °C or higher. In particular embodiments, the vent guide 170 may include at least one of polyacrylic sulfone, polycarbonate, polyether sulfone, polyimide, polyetheretherketone, polybenzimidazole, polypheylene sulfide, polyoxymethylene, polyacrylate, polybenzoxazole, polyphenylene oxide, polytetrafluoroethylene, and polyvinylene fluoride.

The vent guide 170 may be positioned inside the cap plate 120, and the guide walls 53 may protrude to outside of the cap plate 120 only when the safety vent 160 is ruptured. Thus, the vent guide 170 does not complicate an external configuration of the rechargeable battery 100 and does not interfere when assembling the plurality of rechargeable batteries 100, the plurality of bus bars 200, and the bus bar holder 400, and the vent guide 170 doe not thereby impair assembly of the battery module 1000.

The length and width of the vent guide 170 may be set in consideration of the length of the safety vent 160 and the width of the cap plate 120. For example, the length of the vent guide 170 in the length direction D1 of the cap plate 120 may be approximately 1.1 to 1.5 times the length of the safety vent 160, and the width of the vent guide 170 in the width direction D2 of the cap plate 120 may be approximately 0.5 to 1 times the width of the cap plate 120. When these conditions are satisfied, interference with other members such as a plug 180 may be avoided while still providing sufficient adhesion of the vent guide 170 to the cap plate 120.

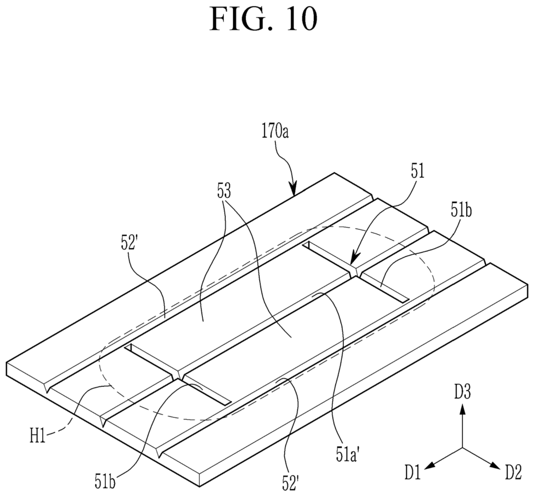

FIG. 10 is a perspective view illustrating an inner surface of a vent guide in a rechargeable battery according to another embodiment of the present disclosure. The configuration except for the vent guide in the rechargeable battery according to this embodiment is the same as that of the above-described embodiment.

Referring to FIG. 10, the length of the main notching line 51a' of the vent guide 170a may be the same as the length of the vent guide 170a, and the length of each the folding lines 52' may be the same as the length of the vent guide 170a. That is, the main notching line 51a' and the pair of folding lines 52' may be positioned in both the center part 171 facing the safety vent and the fixing part 172 fixed to the inner surface of the cap plate.

While a part of the main notching line 51a' positioned in the fixing part 172 does not rupture during an event, the main notching line 51a' positioned in the center part 171 may easily rupture when the safety vent is ruptured. Similarly, a part of the folding line 52' positioned at the fixing part 172 is not actually bent, but the folding line 52' positioned at the center part 171 may be easily bent when the safety vent is ruptured.

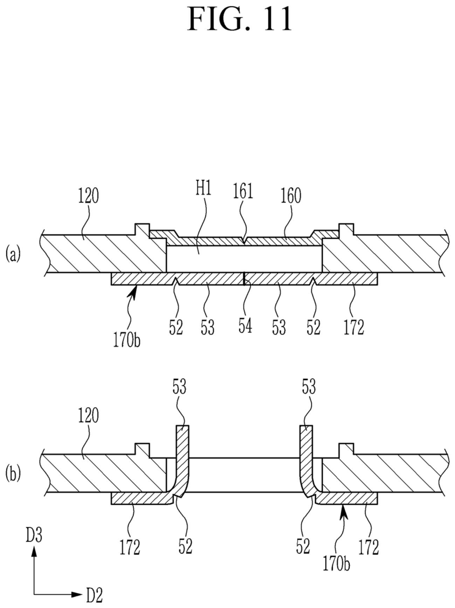

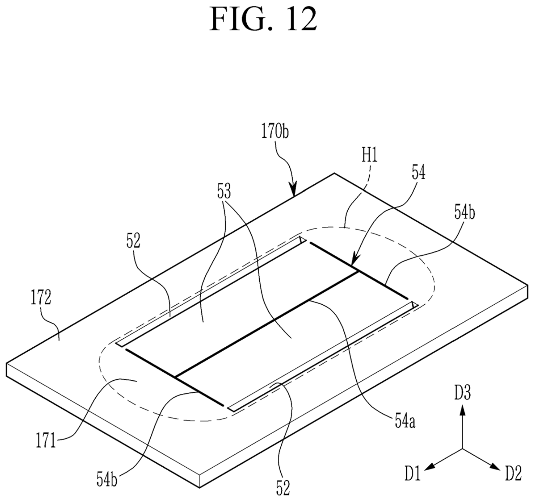

FIG. 11 is a partially enlarged cross-sectional view of a cap plate of a rechargeable battery according to another embodiment of the present disclosure. FIG. 12 is a perspective view illustrating an inner surface of the vent guide shown in FIG. 11. The configuration except for the vent guide in the rechargeable battery according to this embodiment is the same as that of the above-described embodiments.

Referring to FIGS. 11 and 12, the notching line of the above-described embodiments is replaced with a cut line 54 in the present embodiment. That is, a pair of guide walls 53 surrounded by a cut line 54 and a pair of folding lines 52 may be positioned in the center part 171 of the vent guide 170b. The cut line 54 is a line formed by cutting the vent guide 170b along the thickness direction of the vent guide 170b.

The cut line 54 may include a pair of auxiliary cut lines 54b connected to both ends of the main cut line 54a that extends in the length direction D1 of the cap plate 120, with the auxiliary cut lines 54b extending in the width direction D2 of the cap plate 120. The guide walls 53 may be separated from each other by a cut line 54, and the guide walls 53 may be bent with respect to the folding line 52 when the safety vent 160 is ruptured to protrude to outside of the cap plate 120 through the vent hole H1.

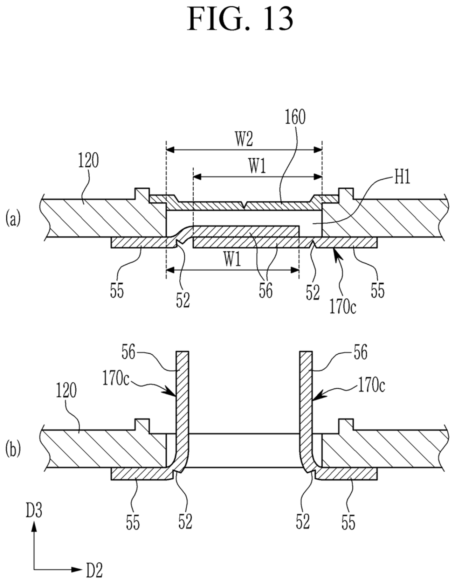

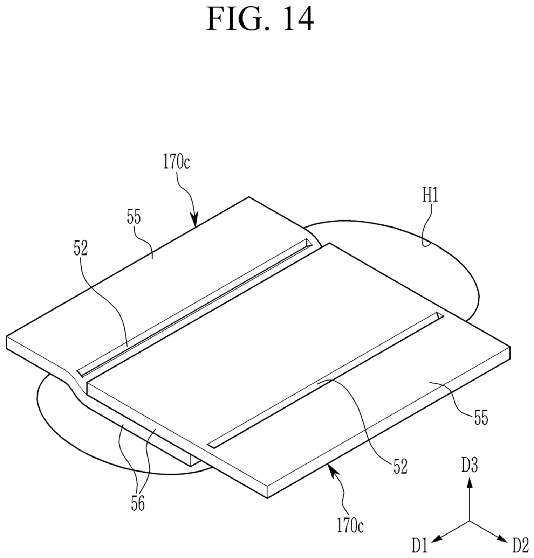

FIG. 13 is a partially enlarged cross-sectional view of a cap plate of a rechargeable battery according to another embodiment of the present disclosure. FIG. 14 is a perspective view illustrating an inner surface of the vent guide shown in FIG. 13(a). The configuration except for the vent guide in the rechargeable battery according to this embodiment is the same as that of the above-described embodiments.

Referring to FIGS. 13 and 14, a pair of vent guides 170c may be provided. Each of the vent guides 170c may include a fixing part 55 overlapping and fixed to the cap plate 120. Each of the vent guides 170c may also include a guide wall 56 positioned in the vent hole H1 and facing the safety vent 160. A folding line 52 may be positioned between the fixing part 55 and the guide wall 56. The folding line 52 may be a notch to a predetermined depth positioned from one surface (for example, an inner surface) of the vent guide 170c.

The pair of fixing parts 55 may face each other with the vent hole H1 interposed therebetween in the width direction D2 of the cap plate 120. That is, the fixing parts 55 may be positioned at both sides of the vent hole H1 in the width direction D2 of the cap plate 120. The fixing parts 55 may be fixed to the cap plate 120, for example, by adhesion or welding.

In each of the vent guides 170c, the guide wall 56 is integrally connected to the fixing part 55 with the folding line 52 interposed therebetween. A width W1 of each guide wall 56 in the width direction D2 of the cap plate 120 may be greater than half of the width W2 of the vent hole H1. For example, the width W1 of each guide wall 56 may be greater than 0.5 times and equal to or less than 1 times the width W2 of the vent hole H1. Accordingly, guide walls 56 may have portions overlapping each other in the thickness direction D3 of the cap plate 120.

Each of the vent guides 170c may be configured in a quadrilateral shape, but the present disclosure is not limited to such a configuration. The length of each vent guide 170c in the length direction D1 of the cap plate 120 may be equal to or shorter than the maximum length of the vent hole H1.

The guide walls 56 may be positioned approximately parallel to the cap plate 120 while covering the vent hole H1. When the safety vent 160 is ruptured, thef guide walls 56 are bent about the folding line 52 by pressure of internal gas and may protrude to the outside of the cap plate 120 through the vent hole H1. The protrusion height of each of the guide walls 56 may be equal to the width W1 of the guide wall 56.

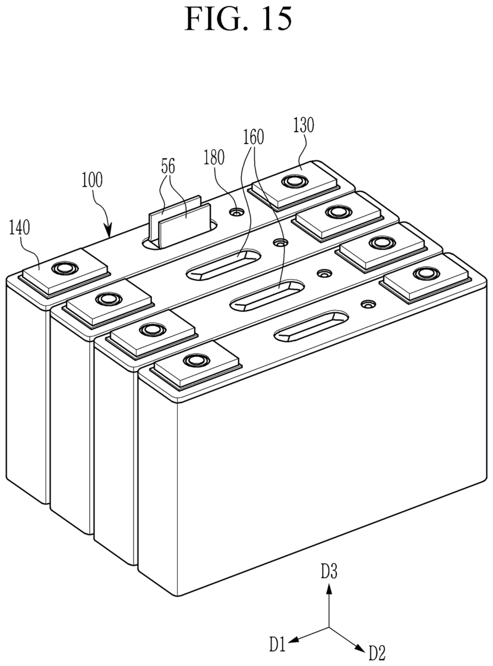

FIG. 15 is a perspective view illustrating rechargeable batteries 100. In FIG. 15, a pair of guide walls 56 are erected in one of the four rechargeable batteries 100.

Referring to FIGS. 13 to 15, the pair of protruding guide walls 56 may be substantially perpendicular to the cap plate 120. In this embodiment, the protrusion height of the guide wall 56 is greater than half of the width W2 of the vent hole H1. That is, the protrusion height of the vertically erected guide walls 56 may be greater than 0.5 times and equal to or less than 1 times the width W2 of the vent hole H1.

The protrusion height of the guide wall 56 may be greater than the protrusion height A1 of the guide wall 53 shown in FIG. 9 and may be approximately 20 mm or more. The width W1 and the protrusion height of the guide wall 56 may be set to be higher than those of FIG. 9 to correspond to a distance between the cap plate 120 and the bus bar holder 400 in the battery module 1000 (see FIG. 1). As the protrusion height of the guide wall 56 is increased, diffusion of ejected materials into the neighboring rechargeable batteries 100 may be effectively suppressed, and the battery module 1000 may be made safer.

Although preferred embodiments of the present disclosure have been described, the present disclosure is not limited thereto, and various modifications of the present disclosure will be apparent to those skilled in the art.

## Claims

1. A rechargeable battery (100) comprising:
a can (110) accommodating an electrode assembly (150) and an electrolyte;
a cap plate (120) coupled to the can (110) to seal the can (110);
a safety vent (160) provided in the cap plate (120) and configured to rupture at a predetermined pressure; and
a vent guide (170, 170a-c) positioned inside the cap plate (120) and facing the safety vent (160),
wherein, the vent guide (170, 170a-c) comprises a pair of guide walls (53, 56) configured to protrude outside of the cap plate (120) when the safety vent (160) is ruptured.

2. The rechargeable battery (100) of claim 1, wherein the guide walls (53, 56) are parallel to an inner surface of the cap plate (120) and are erected at an inclination angle relative to the cap plate (120) when the safety vent ruptures, and the guide walls (53, 56) face each other along a width direction of the cap plate (120).

3. The rechargeable battery (100) of claim 2, wherein each of the guide walls (53, 56) is rectangular shaped, and an edge of a longer side of the rectangular shape extends in a length direction of the cap plate (120).

4. The rechargeable battery (100) of any one of the preceding claims, wherein the vent guide (170, 170a-c) comprises a center part (171) facing the safety vent (160) and a fixing part (55, 172) surrounding the center part (171) and fixed to an inner surface of the cap plate (120),
wherein the pair of guide walls (53, 56) are in the center part (171), and
wherein each of the guide walls (53, 56) is surrounded by a notching line (51, 51b) and a pair of folding lines (52).

5. The rechargeable battery (100) of claim 4, wherein the notching line (51, 51b) comprises a main notching line (51a) extending in a length direction of the cap plate (120) at a center of the center part (171) and a pair of auxiliary notching lines (51, 51b) connected to ends of the main notching line (51a) and extending in a width direction of the cap plate (120), and
wherein the folding lines (52) are parallel to the main notching line (51a), and the folding lines (52) are positioned equidistant from the main notching line (51a) in the width direction of the cap plate (120).

6. The rechargeable battery (100) of claim 4 or 5, wherein each of the notching line (51, 51b) and the folding lines (52) is a notch (161) formed in a surface of the vent guide (170, 170a-c), and
wherein a depth of the notch (161) of the notching line (51, 51b) is deeper than a depth of the notches of the folding lines (52).

7. The rechargeable battery (100) of any one of the claims 4 to 6, wherein a rupture pressure of the notching line (51, 51b) is equal to or lower than a rupture pressure of the safety vent (160), and
wherein a rupture pressure of each of the folding lines (52) is higher than the rupture pressure of the safety vent (160).

8. The rechargeable battery (100) of claim 7, wherein the guide walls (53, 56) are configured to separate from each other when the notching line (51, 51b) ruptures before the safety vent ruptures or simultaneously with the rupture of the safety vent (160), and the guide walls (53, 56) are bent about the folding line (52) to protrude outside of the cap plate (120).

9. The rechargeable battery (100) of any one of the claims 5 to 8, wherein each of the main notching line (51a) and the folding lines (52) extends to edge of the fixing part (55, 172) to have a same length as a length of the vent guide (170, 170a-c).

10. The rechargeable battery (100) of any one of the preceding claims, wherein the vent guide (170, 170a-c) comprises a center part (171) facing the safety vent (160) and a fixing part (55, 172) surrounding the center part (171) and fixed to an inner surface of the cap plate (120),
wherein the guide walls (53, 56) are located in the center part (171), and
wherein each of the guide walls (53, 56) is surrounded by a cut line (54, 54b) and a pair of folding lines (52).

11. The rechargeable battery (100) of claim 10, wherein the cut line (54, 54b) comprises a main cut line (54a) positioned in a length direction of the cap plate (120) from a center of the center part (171), and a pair of auxiliary cut lines (54, 54b) connected to ends of the main cut line (54a) and extending in a width direction of the cap plate (120), and
wherein the folding lines (52) are parallel to the main cut line (54a) and are equidistant from the main cut line (54a) in a width direction of the cap plate (120).

12. The rechargeable battery (100) of claim 10 or 11, wherein the folding lines (52) comprise notches in a surface of the vent guide (170, 170a-c), and
wherein the folding lines (52) are configured such that a rupture pressure of each of the folding lines (52) is higher than a rupture pressure of the safety vent (160).

13. The rechargeable battery (100) of any one of the preceding claims, wherein a vent hole is formed in the cap plate (120),
wherein the safety vent (160) positioned on the cap plate (120) to cover the vent hole,
wherein the pair of guide walls (53, 56) overlap each other, and
wherein, when the safety vent (160) is ruptured, a protrusion height of each of the guide walls (53, 56) is greater than half of a width of the vent hole in a width direction of the cap plate (120).

14. The rechargeable battery (100) of claim 13, wherein the vent guide (170, 170a-c) is provided in a pair,
wherein each of the vent guides (170c) comprises a fixing part (55, 172) fixed to an inner surface of the cap plate (120), one of the guide walls (53, 56) connected to the fixing part (55, 172) and positioned to correspond to the vent hole, and a folding line (52) positioned between the fixing part (55, 172) and the guide wall (53, 56), and
wherein each width of the guide walls (53, 56) in the width direction of the cap plate (120) is greater than 0.5 times and less than or equal to 1 times the width of the vent hole.

15. A battery module (1000) comprising:
a plurality of rechargeable batteries (100);
a plurality of bus bars (200) electrically connecting the plurality of rechargeable batteries (100); and
a bus bar holder (400) supporting the plurality of bus bars (200),
wherein each of the plurality of rechargeable batteries (100) comprises a cap plate (120), a safety vent (160) provided in the cap plate (120) and configured to rupture at a predetermined pressure, and a vent guide (170, 170a-c) positioned inside the cap plate (120) and facing the safety vent (160),
wherein the vent guide (170, 170a-c) comprises a pair of guide walls (53, 56) configured to protrude outside of the cap plate (120) when the safety vent (160) is ruptured,
wherein the plurality of rechargeable batteries (100) is aligned along a width direction of the cap plates (120), and
wherein the guide walls (53, 56) of each of the rechargeable batteries (100) face each other along the width direction of the cap plate (120) when the safety vent (160) is ruptured.
